# FASCICULE DE BREVET EUROPEEN

(11) **EP 1 193 582 B1**
(45) Date de publication et mention de la délivrance du brevet: **16.11.2005**
(21) Numéro de dépôt: 01402425.1
(22) Date de dépôt: 21.09.2001
(51) Int. Cl.: G05B 19/12, G05B 19/409

(54) **Unité de pilotage "universelle" d'outils pour tracteur**
Allgemeine Treibereinheit für Traktorwerkzeuge
Universal driver unit for tractor tools

(30) Priorité: 28.09.2000 FR 0012389
(43) Date de publication de la demande: 03.04.2002
(73) Titulaire: RENAULT AGRICULTURE S.A., 78140 Velizy-Villacoublay (FR)
(72) Inventeur: Drouet, Jackie, 78121 Crespieres (FR); Ollivier, Bernard, 92600 Asnieres (FR)
(74) Mandataire: Srour, Elie

(56) Documents cités:
- EP-A- 0 572 964
- EP-A- 0 768 433
- EP-A- 0 860 557
- WO-A-00/37744
- DE-A- 19 546 201
- DE-U- 9 110 348
- US-A- 4 715 012
- US-A- 5 182 908
- US-A- 5 424 623
- US-A- 5 978 720

## Description

L'invention concerne le domaine des engins aptes à recevoir une pluralité d'outils, simultanément ou non.

L'invention concerne, en particulier, les tracteurs agricoles ou de travaux routiers, ou encore les engins de chantier.

De façon générale, ces engins sont équipés de moyens d'accrochage ou d'attelage pour des outils de différents types, avec liaison mécanique et si nécessaire hydraulique et/ou électrique.

A titre d'exemple, un tracteur agricole peut être équipé à l'avant d'un moyen de terrassement du genre chargeur avec godet à terre ou fourche à fumier, et à l'arrière d'un outil traîné du genre remorque ou pulvérisateur traîné, ou porté du genre semoir, épandeur d'engrais...

A titre d'exemple, un tracteur de travaux routiers peut être équipé à l'avant d'une lame-étrave de déneigement, au centre en position ventrale d'une balayeuse ou d'une faucheuse, et à l'arrière d'un outil traîné du genre remorque avec équipement de salage, ou porté du genre faucheuse, débroussailleuse...

Un engin peut, en général, être équipé d'au moins deux ou trois outils en même temps.

Un outil est souvent pourvu d'un pupitre de commande et d'un levier de commande également appelé "joystick", reliés par un câblage au corps de l'outil, et devant être installés dans le poste de pilotage de l'engin lorsque ledit outil est attelé à l'engin.

*Le document EP-A-O 860 557 décrit un procédé et un dispositif de commande dune machine de construction telle qu'une excavatrice hydraulique, un tractopelle ou un chargeur pour permettre à un* *opérateur qui est en train de remplacer un accessoire frontal tel qu'un godet ou un brise-roche, de régler des conditions de fonctionnement tels que la pression hydraulique, le débit, etc*... *par une simple action selon les exigences spécifiques de l'accessoire sélectionné. Des données appropriées sont stockées dans chaque accessoire de façon que lorsque l'accessoire est connecté à l'engin, les données sont envoyées audit engin selon des signaux de commande émanant de l'engin et requérant la transmission des données et les sources hydrauliques de l'engin tels les pompes et les moteurs d'entraînement des pompes sont automatiquement commandées selon les données appropriées. Un dispositif d'émission de signal pour stocker les données appropriées est monté sur chaque accessoire et lorsque l'accessoire est attelé à l'engin, les données appropriées sont envoyées par l'intermédiaire de fils ou d'ondes radio à un contrôleur adapté pour commander les sources hydrauliques de l'engin. Il n'est pas prévu de moyens de pilotage spécifique d'un outil sélectionné ni de présenter à l'opérateur des informations spécifiques sur la situation de cet outil.*

*Le document WO 00*/*37744 décrit un système de reconnaissance et de commande d'un outil pour configurer électroniquement certains systèmes d'une machine de travail sur la base de paramètres opérationnels associés à un outil de travail particulier prévu pour être fixé sur la machine. La machine comprend des systèmes de commande de fonctionnement d'une pluralité d'outils différentes, chaque outil ayant un jeu de paramètres opérationnels associés.*

*Une fois que l'outil de travail a été identifié et que le jeu approprié de paramètres opérationnels a été sélectionné, un contrôleur électronique couplé aux différents systèmes de la machine et commandant le fonctionnement des différents outils envoie en sortie des signaux appropriés pour configurer électroniquement les systèmes de la machine selon le jeu sélectionné de paramètres opérationnels d'un outil particulier. Ces paramètres opérationnels peuvent être accessibles ou appelés par l'opérateur par un système d'ordinateur embarqué ayant des commandes sélectionnables par l'opérateur pour sélectionner les paramètres opérationnels associés avec chacun des différents outils. L'opérateur peut accéder à un menu d'ordinateur à travers les systèmes* *électroniques associés avec la machine, le menu d'ordinateur identifiant tous les différents outils pouvant être utilisés avec la machine. Le système d'ordinateur embarqué peut comprendre des moyens pour sélectionner chacun des différents outils à partir du menu approprié et lors de la sélection d'un outil particulier, tous les paramètres opérationnels associés avec ledit outil seront appelés et la machine sera reconfigurée en accord avec ces paramètres.*

*De façon générale, le document WO 00*/*37744 propose au conducteur d'une machine d'indiquer à une électronique de commande quel outil va être attelé à la machine.*

La présente invention cherche à réduire l'encombrement du poste de pilotage d'un engin.

La présente invention cherche à faciliter le changement des outils.

*L'invention permet de configurer l'interface à partir de moyens de pilotage spécifiques d'un outil ce qui permet d'atteler un nouvel outil sur un engin existant sans avoir à effectuer d'opération de mise à jour de l'électronique de l'engin.*

*L'invention* concerne un système pouvant commander au moins un outil doté de moyens de pilotage spécifiques à partir d'un engin porte-outil muni d'une interface *homme-machine* de commande des outils et d'affichage d'informations commune pour tous les outils concernés *et d'un écran embarqués sur l'engin. L'interface est configurée par les moyens de pilotage spécifiques d'un outil sélectionné de façon à présenter à l'opérateur des informations spécifiques sur la situation de cet outil et à s'adapter à la commande de celui-ci de façon que l'utilisateur commande ledit outil à partir de ladite interface de commande. Le système comprend un moyen pour identifier un outil monté sur l'engin suite à une communication de données entre l'engin et l'outil.*

De préférence, l'interface comprend un écran d'affichage d'instructions de commande et de données relatives à l'outil sélectionné.

Lorsque l'engin est équipé de plusieurs outils en même temps, le conducteur peut choisir de commander un desdits outils avec l'interface.

Lorsqu'un outil de l'engin a été remplacé par un nouvel outil, le conducteur peut sélectionner ledit nouvel outil pour le commander avec l'interface.

De préférence, le système reçoit des informations en provenance d'un outil monté sur l'engin et adapte l'interface. Lors de l'installation d'un nouvel outil, des données seront envoyées par ledit outil à l'engin pour fournir à l'opérateur des informations d'identification du nouvel outil et des informations pertinentes pour l'utilisation du nouvel outil.

L'interface de commande homme-machine peut comporter une manette ou levier de commande, et au moins un bouton de commande. La manette peut être du type à commande en croix pour commander une première action de l'outil par un mouvement gauche-droite et une deuxième action de l'outil par un mouvement avant-amère.

Dans un mode de réalisation de l'invention, au moins un bouton de commande est formé par une zone tactile de l'écran. Dans ce cas, l'écran assure une fonction d'affichage et une fonction de commande.

Dans un mode de réalisation de l'invention, au moins un bouton de commande est adjacent de l'écran.

Dans un mode de réalisation de l'invention, au moins un bouton de commande est monté sur la manette.

Dans un mode de réalisation de l'invention, le système comprend une unité de commande d'outil solidaire dudit ou desdits outils. L'unité de commande comprend au moins une mémoire pour stocker des données aptes à être envoyées à l'engin pour la commande dudit outil. L'unité de commande peut comprendre un microprocesseur apte à élaborer des consignes de commande destinées à des actionneurs de l'outil.

L'invention concerne également un engin comprenant une interface de commande homme-machine, un moyen de communication de données avec un ou plusieurs outils montés ou aptes à être montés sur l'engin, et un moyen pour sélectionner un outil que l'on veut commander par l'interface de façon que l'interface permette de commander différents outils.

L'engin peut être un tracteur agricole ou de travaux publics.

L'invention concerne également un procédé de commande d'outils à partir d'un engin porte-outils, dans lequel :
- on identifie un outil monté sur l'engin suite à une communication de données entre l'engin et ledit outil, et
- au moyen d'une interface de commande homme-machine, embarquée sur l'engin, *l'interface étant configurée par des moyens de pilotage spécifiques d'un outil sélectionné de façon à présenter à l'opérateur des informations spécifiques sur la situation de cet outil et à s'adapter à la commande de celui-ci,* on propose à l'utilisateur de commander ledit outil à partir de ladite interface de commande, de façon que l'interface permette de commander différents outils.

On peut aussi proposer à l'utilisateur de paramétrer le fonctionnement de l'outil, puis de le commander.

L'invention concerne également un programme d'ordinateur comprenant des moyens de code programme pour mettre en oeuvre les étapes du procédé, lorsque ledit programme fonctionne sur un ordinateur.

L'invention concerne également un support capable d'être lu par un dispositif de lecture de moyens de code programme qui s'y trouvent stockés et qui sont aptes à la mise en oeuvre des étapes du procédé, lorsque ledit programme fonctionne sur un ordinateur.

Dans le cas où plusieurs outils sont montés en même temps sur l'engin, l'invention permet au conducteur de commander l'un puis un autre sans changer de pupitre ou de levier de commande.

Un seul pupitre et un seul levier de commande permettent de commander différents outils. On évite ainsi d'encombrer le poste de pilotage par plusieurs pupitres et leviers de commande.

Un outil peut être séparé de l'engin et remplacé par un nouvel outil tandis que le pupitre et le levier de commande restent les mêmes. Des moyens de connection électrique peuvent être prévus à l'extérieur du poste de pilotage, par exemple à proximité de moyens de connection hydraulique de façon que le poste de pilotage puisse conserver le même équipement quelque soit outil.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :
- la figure 1 est une vue schématique d'un engin selon un mode de réalisation de l'invention;
- la figure 2 est une vue schématique d'un système de commande selon un mode de réalisation de l'invention;
- la figure 3 est une vue de face en élévation d'un levier de commande selon un mode de réalisation de l'invention;
- la figure 4 est une vue de côté en élévation du levier de commande de la figure 3;
- la figure 5 est une vue de face en élévation d'un pupitre selon un mode de réalisation de l'invention; et
- la figure 6 est semblable à la figure 5, d'autres informations étant affichées sur l'écran du pupitre.

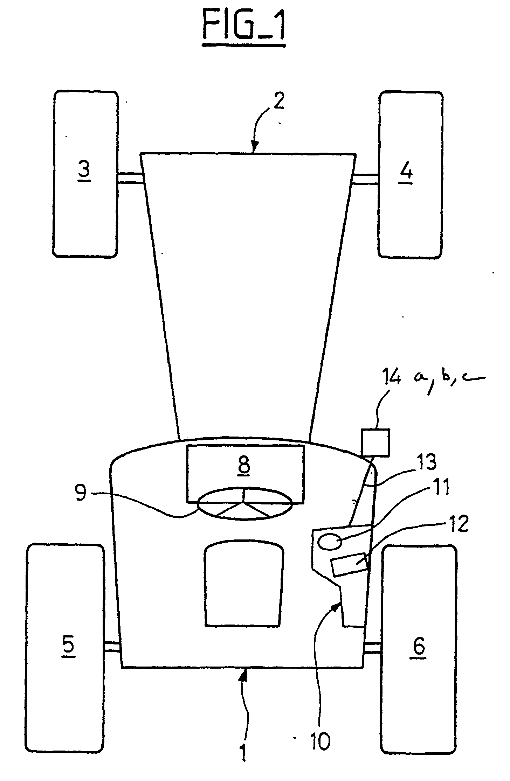

Comme on peut le voir sur la figure 1, un engin comprend une cabine ou poste de pilotage 1, un groupe motopropulseur 2 du genre comprenant un moteur à combustion interne, un embrayage, une boîte de vitesses, un ou plusieurs différentiels, etc., et quatre roues 3 à 6. Le poste de pilotage 1 est équipé, de façon classique, d'un siège 7 pour le conducteur, d'un tableau de bord 8 sur lequel différentes informations relatives à l'engin peuvent être affichées, et pourvu de différents boutons de commande, et d'un volant 9. Le poste de pilotage 1 est équipé en outre d'un ensemble de pilotage universel référencé 10 dans son ensemble.

L'ensemble de pilotage universel 10 est pourvu d'un levier de commande 11 et d'un pupitre 12. L'ensemble de pilotage universel 10 est relié par un câblage 13 à des connecteurs 14a, 14b, 14c permettant de le relier à des outils, non représentés, susceptibles d'être attelés à l'engin. Les outils peuvent être attelés à l'avant, à l'arrière, et éventuellement en position ventrale sous l'engin entre les roues avant 3 et 4 et les roues arrière 5 et 6.

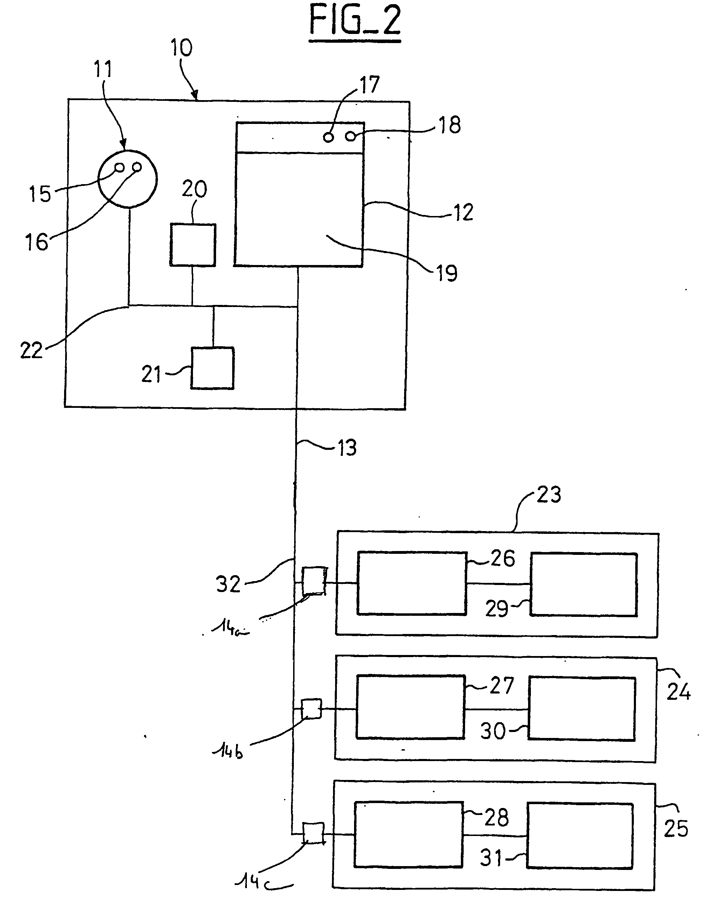

Comme on peut le voir sur la figure 2, l'ensemble de pilotage universel 10 comprend, outre le levier de commande 11 et le pupitre 12, une pluralité de boutons de commande dont deux référencés 15 et 16 sont implantés sur le levier de commande 11 et deux autres référencés 17 et 18 sont implantés sur le pupitre 12, lequel comprend également un écran 19 permettant d'afficher des informations. L'ensemble de pilotage universel est également pourvu d'un microprocesseur 20 et d'au moins une mémoire 21, permettant respectivement de traiter et de stocker des données. Un programme peut être enregistré dans la mémoire 21 pour être exécuté par le microprocesseur 20. La liaison entre ces différents éléments est assurée par un bus de communication 22, par exemple de type CAN, qui s'étend jusqu'aux connecteurs 14a, 14b, 14c, grâce au câblage 13.

L'engin est équipé ici de trois outils référencés 23, 24 et 25. Chaque outil 23 à 25 est pourvu d'un calculateur, respectivement 26, 27 et 28, les autres parties des outils 23 à 25 portant respectivement les références 29 à 31. Les calculateurs 26 à 28 sont chacun reliés par un câblage 32 aux connecteurs. Les connecteurs sont débranchables, une partie de chaque connecteur étant solidaire de l'outil et l'autre du porte-outils, ce qui permet de séparer un outil de l'engin. La liaison mécanique entre outil et engin est de tout type connu et n'a pas été représentée. Le calculateur 26 à 28 d'un outil 23 à 25 est apte à envoyer à l'ensemble de pilotage universel 10 de l'engin des données d'identification permettant l'affichage sur l'écran 19 d'une liste d'outils attelés à l'engin, parmi laquelle le conducteur peut choisir l'outil qu'il commandera avec l'ensemble de pilotage universel 10.

Par exemple, si l'outil 23 est sélectionné par le conducteur, le calculateur 26 envoie ensuite des données relatives à l'outil 23 et permettant de le commander au moyen du levier de commande 11 et des différents boutons 15 à 18. Le microprocesseur 20 peut alors affecter une fonction particulière au levier de commande 11 et aux différents boutons de commande 15 à 18.

La liste des différents outils attelés peut être affichée sur l'écran 19 sous la forme d'un menu déroulant, dans lequel l'utilisateur pourra effectuer un choix, soit au moyen du levier de commande 11 fonctionnant à l'instar d'une souris d'un ordinateur de bureau, soit en touchant l'écran 19 lui-même pourvu de zones tactiles.

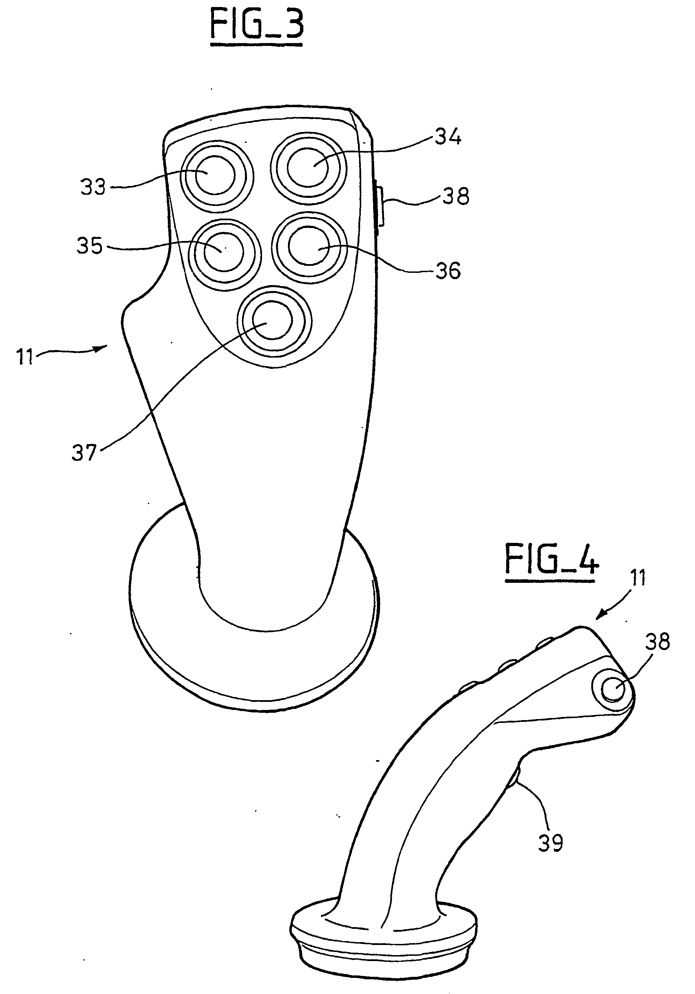

Sur les figures 3 et 4, est représenté un autre exemple de levier de commande 11 pourvu de sept boutons. Cinq boutons, référencés 33 à 37, sont prévus sur une face avant du levier de commande 11, un bouton 38 est implanté sur une paroi latérale selon un axe du levier de commande 11 et un bouton 39 est implanté sur une paroi arrière du levier de commande 11. Le levier de commande est dit "à commande en croix", c'est-à-dire que le conducteur peut le déplacer selon un axe avant-arrière pour provoquer une certaine action d'un outil, et selon un axe gauche-droite pour provoquer une autre action d'un outil.

A titre d'exemple, si le conducteur choisit de commander un outil du type "épareuse" utilisé pour tailler les haies ou faucher les accotements des routes, les boutons 33 et 34 serviront de commande d'anti-déversement, les boutons 35 et 36 serviront de commande de pivotement dans deux sens de rotation opposés, le bouton 37 sera dédié à la commande de la sustentation électrique permettant de maintenir constante la hauteur de l'épareuse, le bouton 38 sera dédié à une commande de flottement permettant de relâcher la pression du liquide hydraulique dans des actionneurs hydrauliques de l'outil, et le bouton 39 sera dédié à une commande de retour automatique en position inactive pour un trajet de liaison.

Si le levier de commande 11 est affecté à la commande d'un chargeur avant, le bouton 33 sera dédié à l'ouverture de la griffe ou du godet, le bouton 34 à la fermeture de la griffe ou du godet, le bouton 35 sera dédié à l'extension d'un surélévateur, le bouton 36 sera dédié à la rétraction du surélévateur, le bouton 37 sera dédié au secouage du godet ou de la griffe, les fonctions des boutons 38 et 39 étant les mêmes que précédemment.

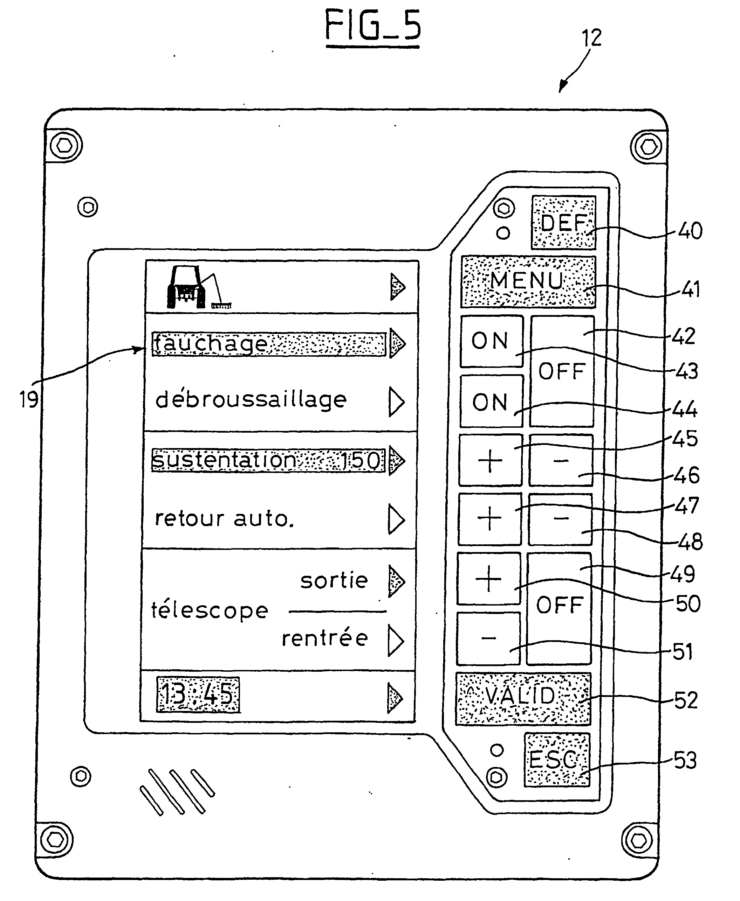

Sur la figure 5, est illustré un mode de réalisation du pupitre 12. L'écran 19 est ici de type classique non tactile et affiche des informations relatives à la commande d'un outil du type épareuse. Le pupitre 12 est pourvu d'une pluralité de boutons de commande référencés 40 à 53.

Le bouton 40 est dédié au fonctionnement en marche forcée en cas de défaut. Le bouton 41 permet de commander l'affichage d'un menu. Le bouton 42 permet de désactiver les fonctions affichées dans la zone correspondante de l'écran 19, ici les fonctions "fauchage" et "débroussaillage". Le bouton 43 permet de valider la fonction de la première ligne de l'écran 19, ici "fauchage". Le bouton 44 permet de valider la fonction affichée sur la deuxième ligne de l'écran 19, ici "débroussaillage". La première ligne de l'écran apparaît en contraste inversé par rapport au reste de l'écran, ce qui indique que la fonction correspondante a été choisie. Le bouton 45 permet d'augmenter une fonction proposée sur la troisième ligne de l'écran, ici "sustentation", la quantité indiquée étant "150". Le bouton 46 permet de faire décroître cette même quantité. Les boutons 47 et 48 permettent respectivement de faire croître ou décroître la quantité d'une fonction affichée sur la quatrième ligne de l'écran, ici "retour auto", ce qui signifie retour automatique. Le bouton 49 permet d'invalider une fonction proposée sur les cinquième et sixième lignes de l'écran. Les boutons 50 et 51 permettent respectivement de faire croître ou décroître une fonction proposée sur les cinquième et sixième lignes de l'écran 19, ici "sortie du télescope" sur la cinquième ligne et "rentrée du télescope" sur la sixième ligne". Le bouton 52 permet de valider un choix effectué précédemment. Le bouton 53 permet de retourner au menu principal.

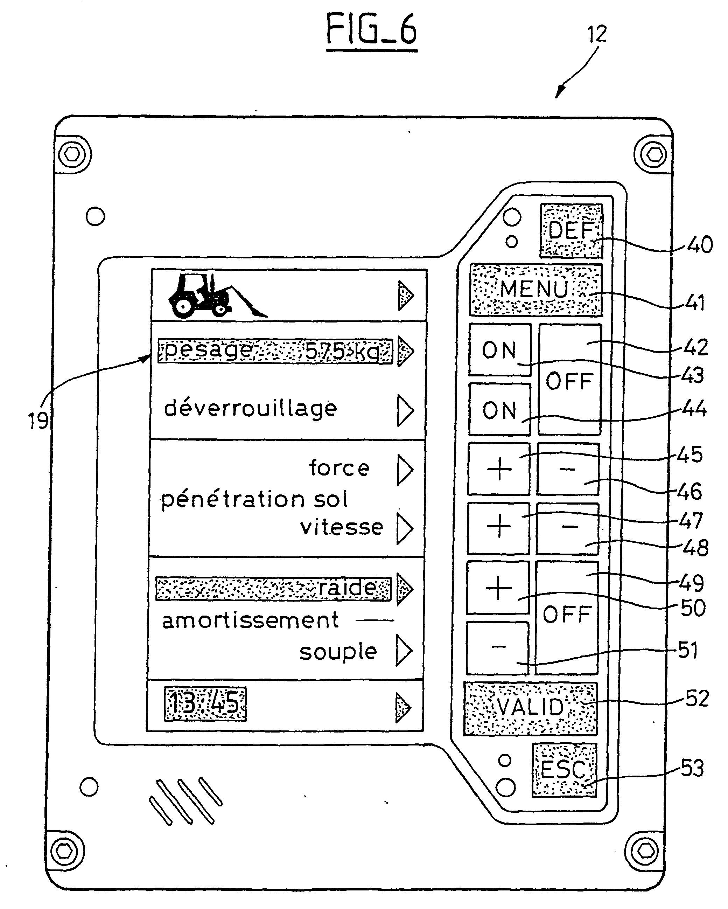

Sur la figure 6, est illustré le même pupitre 12, le conducteur ayant ici choisi de commander un chargeur disposé à l'avant de son engin. La première ligne de l'écran 19 propose une fonction de pesage. La deuxième ligne de l'écran propose un déverrouillage qui provoque la désactivation du pesage. Les troisième et quatrième lignes de l'écran proposent un réglage de la pénétration dans le sol avec réglage de la force pour la troisième ligne ou de la vitesse pour la quatrième ligne. Les cinquième et sixième lignes de l'écran proposent un réglage de l'amortissement du mouvement du chargeur en en augmentant la raideur si on sélectionne la cinquième ligne au moyen du bouton 50 ou en augmentant au contraire la souplesse en sélectionnant la sixième ligne au moyen du bouton 51. Sur la septième ligne, est affichée l'heure courante.

Toutefois, la septième ligne peut également servir à afficher des informations spécifiques à l'outil ou au contraire spécifiques à l'engin. Bien entendu, l'écran 19 peut également servir à afficher uniquement des informations relatives à l'engin, telles que régime du moteur, la vitesse de déplacement, la pression d'huile, la température de fluide de refroidissement, etc., ainsi que des alertes, telles qu'une tension de batterie trop faible, un bas niveau de carburant dans le réservoir, un bas niveau d'huile, etc.

On comprend donc que l'on implante dans l'engin, à la disposition des outils, une unité de pilotage universelle qui constitue l'interface homme/machine, et comprenant un levier de commande fixe dans le poste de pilotage ou solidaire du siège du conducteur, un pupitre comprenant un écran et des boutons de commande intégrés à l'écran ou proches de celui-ci, par exemple à proximité d'une position naturelle de la main droite du conducteur. L'écran permet de choisir l'outil que l'on veut utiliser parmi une liste, de choisir un paramétrage de l'outil en fonction du travail à effectuer et/ou de l'utilisateur, avec si besoin également un menu déroulant à l'écran, et d'afficher les fonctions des différents boutons pour personnaliser l'unité universelle de commande une fois la programmation faite.

La personnalisation à l'outil peut être effectuée par le fabricant de l'outil et peut prévoir l'affichage de la marque et du type d'outil comme s'il s'agissait d'un bloc de commandes spécifique audit outil. On peut également prévoir que l'écran soit capable d'afficher des informations relatives à l'utilisation de l'outil avec le nombre d'heures effectué ainsi qu'un suivi de la maintenance.

## Revendications

1. Système de commande d'au moins un outil doté de moyens de pilotage spécifiques à partir d'un engin porte-outil muni d'une interface *homme-machine* de commande des outils et d'affichage d'informations commune pour tous les outils concernés *et d'un écran embarqués sur l'engin,* **caractérisé en ce que** l'interface est configurée par les moyens de pilotage spécifiques d'un outil sélectionné de façon à présenter à l'opérateur des informations spécifiques sur la situation de cet outil et à s'adapter à la commande de celui-ci *de façon que l'utilisateur commande ledit outil à partir de ladite interface de commande, le système comprenant un moyen pour identifier un outil monté sur l'engin suite à une communication de données entre l'engin et ledit outil.*

2. Système de commande selon la revendication 1, **caractérisé en ce que** l'interface comprend un écran (19) d'affichage d'instructions de commande et de données relatives à l'outil sélectionné.

3. Système selon la revendication 1 ou 2, **caractérisé par le fait que** l'interface de commande homme-machine comprend une manette (11), et au moins un bouton de commande (15).

4. Système selon l'une quelconque des revendications précédentes, **caractérisé par le fait qu'**au moins un bouton de commande est formé par une zone tactile de l'écran.

5. Système selon l'une quelconque des revendications précédentes, **caractérisé par le fait qu'**au moins un bouton de commande (17) est adjacent de l'écran.

6. Système selon l'une quelconque des revendications précédentes, **caractérisé par le fait qu'**au moins un bouton de commande (15) est monté sur la manette (11).

7. Système selon l'une quelconque des revendications précédentes, **caractérisé par le fait qu'**il comprend une unité de commande (26) d'outil solidaire dudit ou desdits outils.

8. Engin comprenant un système selon l'une quelconque des revendications précédentes.

9. Tracteur agricole ou de travaux publics selon la revendication 8.

10. Procédé de commande d'outils à partir d'un engin porte-outils, dans lequel :
- on identifie un outil monté sur l'engin suite à une communication de données entre l'engin et ledit outil, et
- au moyen d'une interface de commande homme-machine, et d'un écran embarqués sur l'engin, *l'interface étant configurée par des moyens de pilotage spécifiques d'un outil sélectionné de façon à présenter à l'opérateur des informations spécifiques sur la situation de cet outil et à s'adapter à la commande de celui-ci,* on propose à l'utilisateur de commander ledit outil à partir de ladite interface de commande, de façon que l'interface permette de commander différents outils.

## Patentansprüche

1. Steuersystem für wenigstens ein Werkzeug, versehen mit spezifischen Steuer- bzw. Führungsmitteln, ausgehend von einer Werkzeug tragenden Maschine, versehen mit einer Mensch-/Maschinenschnittstelle zur Werkzeugsteuerung und Informationsanzeige, gemeinsam für all die betroffenen Werkzeuge, und einem Bildschirm, die an Bord der Maschine sind, **dadurch gekennzeichnet, dass** die Schnittstelle durch die spezifischen Steuermittel eines ausgewählten Werkzeugs derart konfiguriert wird, um dem Bediener Informationen anzuzeigen, die spezifisch für die Situation dieses Werkzeugs sind, und sich an die Anweisung desselben nach der Art anzupassen, wie der Bediener das Werkzeug steuert, ausgehend von der Steuerschnittstelle, wobei das System ein Mittel umfasst zum Identifizieren eines Werkzeugs, das an der Maschine befestigt ist nach einer Kommunikation von Daten zwischen der Maschine und dem Werkzeug.

2. Steuersystem nach Anspruch 1, **dadurch gekennzeichnet, dass** die Schnittstelle einen Bildschirm (19) umfasst zur Anzeige von Steueranweisungen und Daten, die Bezug auf das ausgewählte Werkzeug haben.

3. System nach Anspruch 1 oder 2, **dadurch gekennzeichnet, dass** die Mensch-/Maschinensteuerschnittstelle einen Hebel (11) und wenigstens einen Steuerknopf (15) umfasst.

4. System nach einem der vorhergehenden Ansprüche, **dadurch gekennzeichnet, dass** wenigstens ein Steuerknopf durch eine taktile Zone des Bildschirms gebildet ist.

5. System nach einem der vorhergehenden Ansprüche, **dadurch gekennzeichnet, dass** wenigstens ein Steuerknopf (17) dem Bildschirm benachbart ist.

6. System nach einem der vorhergehenden Ansprüche, **dadurch gekennzeichnet, dass** wenigstens ein Steuerknopf (15) auf dem Hebel (11) befestigt ist.

7. System nach einem der vorhergehenden Ansprüche, **dadurch gekennzeichnet, dass** es eine Steuereinheit (26) umfasst, welche mit dem Werkzeug oder den Werkzeugen einstückig ist.

8. Maschine, welche ein System nach einem der vorhergehenden Ansprüche umfasst.

9. Traktor bzw. Maschine für Landwirtschaft oder Tiefbau nach Anspruch 8.

10. Verfahren zur Steuerung von Werkzeugen ausgehend von einer Werkzeuge tragenden Maschine, in welchem:
- man ein Werkzeug identifiziert, das an der Maschine befestigt ist, nach einer Kommunikation von Daten zwischen der Maschine und dem Werkzeug, und
- mittels einer Mensch-/Maschinensteuerschnittstelle und eines Bildschirms, die an Bord der Maschine sind, wobei die Schnittstelle durch die spezifischen Steuermittel eines ausgewählten Werkzeugs derart konfiguriert wird, dem Bediener spezifische Informationen über die Situation dieses Werkzeugs anzuzeigen und sich an den Befehl desselben anzupassen, man dem Verwender vorschlägt, das Werkzeug zu steuern ausgehend von der Steuerschnittstelle, derart, dass die Schnittstelle es erlaubt, verschiedene Werkzeuge zu steuern.

## Claims

1. Control system for at least one tool equipped with specific means of control through a tool-carrying device equipped with a tool-control and information-display *man-machine* interface common to all the tools concerned *and a screen on board the device,* **characterized in that** the interface is configured by the control means specific to a selected tool so as to provide the operator with specific information on the situation of that tool and follow his command *so that the user controls the tool through the control interface, the system comprising a means for identifying a tool mounted on the device as a result of communication of data between the device and the tool.*

2. Control system according to claim 1, **characterized in that** the interface comprises a screen (19) displaying control instructions and data relating to the selected tool.

3. System according to claim 1 or 2, **characterized in that** the man-machine control interface comprises a control lever (11) and at least one control button (15).

4. System according to any one of the previous claims, **characterized in that** at least one control button is formed by a touch-sensitive zone of the screen.

5. System according to any one of the previous claims, **characterized in that** at least one control button (17) is adjacent to the screen.

6. System according to any one of the previous claims, **characterized in that** at least one control button (15) is mounted on the control lever (11).

7. System according to any one of the previous claims, **characterized in that** it comprises a tool control unit (26) integral with the tool or tools.

8. Device comprising a system according to any one of the previous claims.

9. Agricultural or public works tractor according to claim 8.

10. Method for controlling tools through a tool-carrying device in which:
- a tool mounted on the device is identified as a result of communication of data between the device and the tool, and
- by means of a man-machine control interface, and a screen on board the device, *the interface being configured by control means specific to a selected tool so as to provide the operator with specific information on the situation of that tool and follow his command,* the user is able to control the tool through the control interface, in such a way that the interface enables different tools to be controlled.
